# EUROPEAN PATENT APPLICATION

(11) **EP 4 300 698 A1**
(43) Date of publication of application: **03.01.2024**
(21) Application number: 21928575.6
(22) Date of filing: 05.03.2021
(51) Int. Cl.: H01M 50/503

(54) **BUTTON CELL AND POWER CONSUMING DEVICE**

(71) Applicant: Ningde Amperex Technology Limited, Ningde, Fujian 352100 (CN)
(72) Inventor: XIA, Lin, Ningde, Fujian 352100 (CN)
(74) Representative: Icosa
(86) International application number: PCT/CN2021/079341
(87) International publication number: WO 2022/183492

(57) **Abstract**

This application relates to the field of battery technology, and discloses a button battery and an electrical device. The button battery includes a housing assembly, an electrode assembly, a first tab, and a second tab. The housing assembly includes a first conductive portion and a second conductive portion. The first conductive portion is insulated from the second conductive portion. The electrode assembly includes first electrode plates and second electrode plates of opposite polarities. The first tab includes a first connecting portion and a first extension portion. The first connecting portion is connected to each first electrode plate, and the first extension portion assumes a continuously curved shape. One of the first conductive portion or the second conductive portion is connected to the first electrode plate. When the button battery is dropped, the electrode assembly inside the housing assembly is displaced relative to the housing assembly. The first extension portion of the first tab is in a continuously curved shape, and therefore, can be easily deformed under the impact force in the dropping process. Through the deformation, a part of energy of the impact force can be absorbed. Therefore, the button battery can effectively reduce the hazards of tab fracture during the drop of the button battery.

## Description

### TECHNICAL FIELD

This application relates to the field of battery technology, and in particular, to a button battery and an electrical device.

### BACKGROUND

A button battery, also known as a coin cell, is shaped like a button. Button batteries are widely used in electronic devices by virtue of a space-saving footprint, portability, a steady discharge voltage, and other advantages.

Currently, there is a type of button battery that includes a housing, an electrode post mounted on the housing, and an electrode assembly accommodated in the housing. Both the housing and the electrode post are conductors and insulated from each other, so as to form a positive terminal and a negative terminal of the button battery respectively. The electrode assembly may be wound into a columnar structure or a quasi-columnar structure, or stacked into a columnar or quasi-columnar structure. Regardless of the structural form, the electrode assembly includes a first electrode plate, a second electrode plate, and a separator between the positive electrode plate and the negative electrode plate. Neither the first electrode plate nor the second electrode plate is directly connected to the housing. One tab is connected to the first electrode plate and the housing, and another tab is connected to the second electrode plate and the electrode post.

In the process of implementing this application, the applicant hereof finds that: when a button battery is dropped, the electrode assembly will be displaced relative to the housing, so that the tabs are stressed and prone to fracture.

### SUMMARY

An objective of this application is to provide a button battery and an electrical device to reduce hazards of tab fracture during dropping of the button battery.

To achieve the above objective, this application discloses the following technical solution:

A button battery is disclosed, including a housing assembly, an electrode assembly, a first tab, and a second tab. The housing assembly forms an accommodation cavity. The housing assembly includes a first conductive portion and a second conductive portion. The first conductive portion is insulated from the second conductive portion. The electrode assembly is accommodated in the accommodation cavity and includes first electrode plates, second electrode plates, and a separator. The first electrode plates and the second electrode plates are of opposite polarities and stacked alternately along a first preset direction. The separator is disposed between the first electrode plate and the second electrode plate. The first tab is accommodated in the accommodation cavity and includes a first connecting portion and a first extension portion. The first connecting portion is connected to each first electrode plate. The first extension portion extends along the first preset direction and assumes a curved shape. A first end of the first extension portion is connected to the first connecting portion. One of the first conductive portion or the second conductive portion is connected to a second end of the first extension portion. The second tab is accommodated in the accommodation cavity and connected to each second electrode plate, and the other of the first conductive portion or the second conductive portion is connected to the second tab.

As an improvement of the above technical solution, an outer contour of each first electrode plate includes a first straight section extending straight. All the first straight sections of the first electrode plates are substantially aligned with each other. The first connecting portion is connected to the first straight section of each first electrode plate. the first extension portion includes two first lateral faces disposed opposite to each other along a second preset direction, each first lateral face includes a first concave face region recessed toward the other first lateral face and a first convex face region protruding away from the other first lateral face, and the second preset direction is parallel to an extension direction of the first straight section.

As an improvement of the above technical solution, the first electrode plate includes a first straight section extending straight. All the first straight sections of the first electrode plates are substantially aligned with each other. The first connecting portion is connected to the first straight section of each first electrode plate. The first extension portion includes two second lateral faces disposed opposite to each other along a third preset direction. Each second lateral face includes a second concave face region recessed toward the other second lateral face and a second convex face region protruding away from the other second lateral face. The third preset direction is perpendicular to both the first preset direction and an extension direction of the first straight section.

As an improvement of the above technical solution, the first tab includes a plurality of first conductive strips. The first conductive strips are in one-to-one correspondence with the first electrode plates, and the first conductive strips are formed by extending outward from the first straight sections. Each first conductive strip includes a first connecting strip and a first extension strip, the first connecting strip is connected to the first straight section, and the first extension strip is connected to the first connecting strip. An outermost first connecting strip extends away from a center of the connected first electrode plate. Remaining first connecting strips extend from the corresponding first straight sections until the first connecting strips are close to or in fit with the outermost first connecting strip. All the first connecting strips combine to form the first connecting portion, and all the first extension strips are stacked to form the first extension portion.

As an improvement of the above technical solution, the first electrode plate includes a first current collector and a first active material layer disposed on a surface of the first current collector. The first conductive strip is formed by extending outward from an edge of the first current collector, and the first conductive strip and the first current collector are formed in one piece.

As an improvement of the above technical solution, the second tab includes a second connecting portion and a second extension portion. The second connecting portion is connected to each second electrode plate. The second extension portion extends along the first preset direction and assumes a curved shape. A first end of the second extension portion is connected to the second connecting portion. One of the first conductive portion or the second conductive portion is connected to the first extension portion, and the other of the first conductive portion or the second conductive portion is connected to a second end of the second extension portion.

As an improvement of the above technical solution, an outer contour of each second electrode plate includes a second straight section extending straight. All the second straight sections of the second electrode plates are substantially aligned with each other. The second connecting portion is connected to the second straight section of each second electrode plate. The second extension portion includes two third lateral faces disposed opposite to each other along a fourth preset direction. Each third lateral face includes a third concave face region recessed toward the other third lateral face and a third convex face region protruding away from the other third lateral face. The fourth preset direction is parallel to an extension direction of the second straight section.

As an improvement of the above technical solution, the first extension portion and/or the second extension portion is in a continuously curved shape.

As an improvement of the above technical solution, an outer contour of each second electrode plate includes a second straight section extending straight. All the second straight sections of the second electrode plates are substantially aligned with each other. The second connecting portion is connected to the second straight section of each second electrode plate. The second extension portion includes two third lateral faces disposed opposite to each other along a fifth preset direction. Each third lateral face includes a third concave face region recessed toward the other third lateral face and a third convex face region protruding away from the other third lateral face. The fifth preset direction is parallel to both the first preset direction and an extension direction of the second straight section.

As an improvement of the above technical solution, the second straight section is parallel to the extension direction of the first straight section.

As an improvement of the above technical solution, the second tab includes a plurality of second conductive strips. The second conductive strips are in one-to-one correspondence with the second electrode plates, and the second conductive strips are formed by extending outward from the second straight sections. Each second conductive strip includes a second connecting strip and a second extension strip, the second connecting strip is connected to the second straight section, and the second extension strip is connected to the second connecting strip. An outermost second connecting strip extends away from a center of the connected second electrode plate. Remaining second connecting strips extend from the corresponding second straight sections until the second connecting strips are close to or in fit with the outermost second connecting strip. All the second connecting strips combine to form the second connecting portion. All the second extension strips are stacked to form the second extension portion.

As an improvement of the above technical solution, the second electrode plate includes a second current collector and a second active material layer disposed on a surface of the second current collector. The second conductive strip is formed by extending outward from an edge of the first current collector, and the second conductive strip and the second current collector are formed in one piece.

As an improvement of the above technical solution, the first conductive portion includes a first wall portion, a second wall portion, and a connecting wall. The first wall portion and the second wall portion are disposed opposite to each other along the first preset direction. The connecting wall connects the first wall portion and the second wall portion. The first wall portion, the second wall portion, and the connecting wall close in to form the accommodation cavity. A through mounting hole is created on the connecting wall, and the second conductive portion is mounted in the mounting hole through an insulator.

To achieve the above objective, this application further discloses the following technical solution:

An electrical device, including the button battery described above.

Beneficial effects of this application are as follows:

The button battery provided in an embodiment of this application includes a housing assembly, an electrode assembly, a first tab, and a second tab. The housing assembly includes a first conductive portion and a second conductive portion. The first conductive portion is insulated from the second conductive portion. The electrode assembly includes first electrode plates and second electrode plates of opposite polarities. The first tab includes a first connecting portion and a first extension portion. The first connecting portion is connected to each first electrode plate, and the first extension portion assumes a continuously curved shape. One of the first conductive portion or the second conductive portion is connected to the first electrode plate.

In contrast with the button battery currently available in the market, when the button battery provided in an embodiment of this application is dropped, the electrode assembly inside the housing assembly is displaced relative to the housing assembly. The first extension portion of the first tab is in a continuously curved shape, and therefore, can be easily deformed (for example, stretched or contracted) under the impact force in the dropping process. Through the deformation, a part of energy of the impact force can be absorbed. Therefore, the button battery provided in an embodiment of this application can effectively reduce the hazards of tab fracture during the drop of the button battery.

### BRIEF DESCRIPTION OF DRAWINGS

To describe the technical solutions in some embodiments of this application more clearly, the following outlines the drawings to be used in the description of some embodiments. Evidently, the drawings outlined below are merely a part of embodiments of this application. A person of ordinary skill in the art may derive other drawings from the illustrated structure without making any creative effort.
FIG. 1 is a three-dimensional schematic exploded view of a button battery viewed from one direction according to an embodiment of this application;
FIG. 2 is a schematic diagram of connection between a first tab in FIG. 1 and an electrode assembly when a first extension portion is bent to be parallel to a first electrode plate; and
FIG. 3 is a schematic diagram of connection between a first conductive strip in FIG. 1 and a first electrode plate when the first conductive strip is spread out to be parallel to the first electrode plate.

### List of reference numerals:

1. button battery;
100. housing assembly; 110. first conductive portion; 120. second conductive portion; 111. first wall portion; 112. second wall portion; 113. connecting wall; 101. accommodation cavity; 102. mounting hole;
200. electrode assembly; 210. first electrode plate; 220. second electrode plate; 230. separator; 211. first current collector; 221. second current collector; 201. first straight section; 202. second straight section;
300. first tab; 310. first connecting portion; 320. first extension portion; 330. first conductive strip; 321. first lateral face; 322. second lateral face; 3211. first concave face region; 3212. first convex face region; 331. first connecting strip; 332. first extension strip; 3321. concave portion; 3322. convex portion; and
400: second tab.

### DETAILED DESCRIPTION

For ease of understanding this application, the following describes this application in more detail with reference to drawings and specific embodiments. It is hereby noted that an element referred to herein as being "fixed to" or "fastened to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

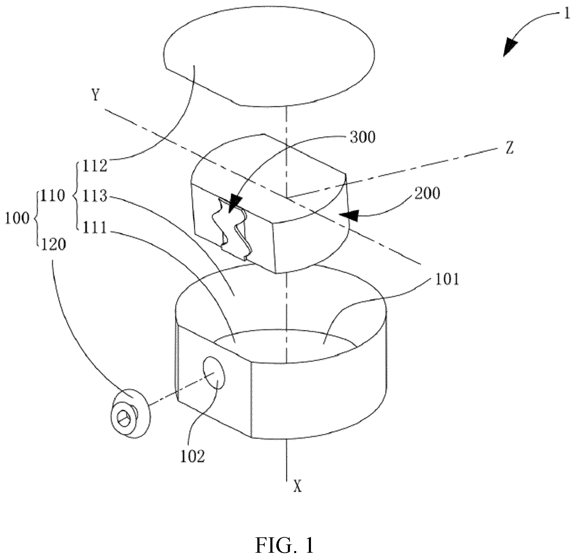

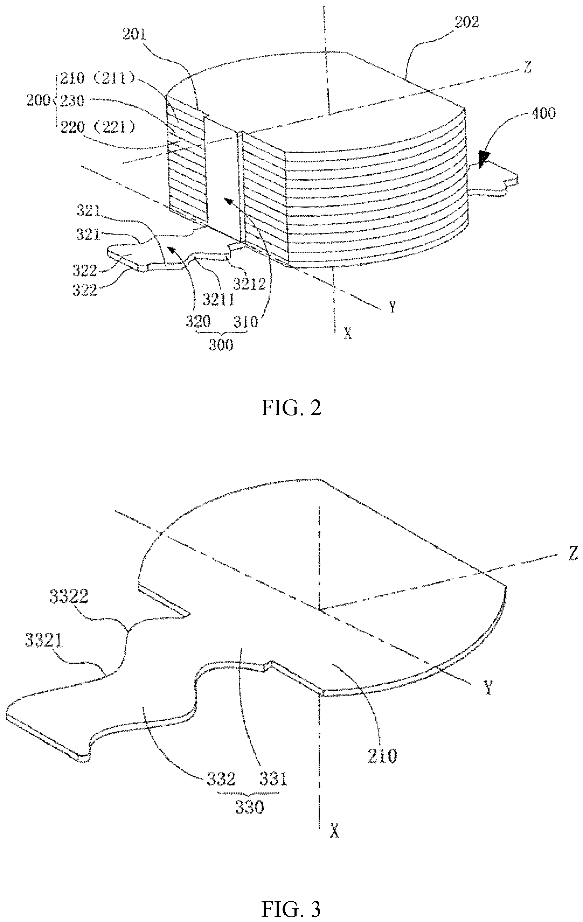

Referring to FIG. 1, which is a three-dimensional schematic exploded view of a button battery 1 according to an embodiment of this application, and referring to FIG. 2, which is a schematic diagram of connection between a first tab and an electrode assembly when a first extension portion is bent to be parallel to a first electrode plate, the button battery 1 includes a housing assembly 100, an electrode assembly 200, a first tab 300, and a second tab 400. The housing assembly 100 forms an accommodation cavity 101. The housing assembly 100 includes a first conductive portion 110 and a second conductive portion 120 insulated from each other. The electrode assembly 200 is accommodated in the accommodation cavity 101 and includes first electrode plates 210, second electrode plates 220, and a separator 230. The first electrode plates 210 and the second electrode plates 220 are of opposite polarities and stacked alternately along a first preset direction X. The separator 230 is disposed between the first electrode plate 210 and the second electrode plate 220. The first tab 300 is accommodated in the accommodation cavity 101 and includes a first connecting portion 310 and a first extension portion 320. The first connecting portion 310 is connected to each first electrode plate 210. The first extension portion 320 extends along the first preset direction X and assumes a curved shape, and preferably a continuously curved shape. A first end of the first extension portion is connected to the first connecting portion 310. One of the first conductive portion 110 or the second conductive portion 120 is connected to a second end of the first extension portion 320. Similarly, the second tab 400 is accommodated in the accommodation cavity 101 and connected to each second electrode plate 220. The other of the first conductive portion 110 or the second conductive portion 120 is connected to the second tab 400.

For the housing assembly 100, referring to FIG. 1, the housing assembly 100 is a structure for holding the electrode assembly 200, the first tab 300, and the second tab 400, and forms an accommodation cavity 101 for accommodating the electrode assembly, the first tab, and the second tab. The housing assembly 100 includes a first conductive portion 110 and a second conductive portion 120 insulated from each other. Of the first conductive portion 110 or the second conductive portion 120, one is connected to the first tab 300, and the other is connected to the second tab 400, so that the first conductive portion 110 and the second conductive portion 120 form a positive terminal and a negative terminal of the button battery 1 respectively.

In this embodiment, the first conductive portion 110 is shell-shaped on the whole, and includes a first wall portion 111, a second wall portion 112, and a connecting wall 113. The first wall portion 111 and the second wall portion 112 are in a flat plate shape or a sheet structure, and are disposed opposite to each other along the first preset direction X. The connecting wall 113 as a whole assumes a cylindrical structure extending along the first preset direction X. One end of the connecting wall is connected to the first wall portion 111, and the other end of the connecting wall is connected to the second wall portion 112, so that the first wall portion 111, the second wall portion 112, and the connecting wall 113 together define the accommodation cavity 101. The second conductive portion 120 is an electrode post. Correspondingly, a through mounting hole 102 is created on the connecting wall 113. The second conductive portion 120 is mounted in the mounting hole 102 through an insulator. For example, in some embodiments, the second conductive portion 120 and the wall of the mounting hole 102 are interspaced with plastic to insulate the first conductive portion 110 from the second conductive portion 120. Alternatively, in some other embodiments of this application, the plastic may be replaced by other insulators such as rubber. Preferably, to facilitate the mounting of the second conductive portion 120, the outer surface of the connecting wall 113 includes a flat face, and the mounting hole 102 is created on the flat face. It is worth noting that this application does not limit the specific position of the second conductive portion 120. In some other embodiments of this application, the second conductive part 120 may be disposed on the first wall portion 111 or the second wall portion 112 instead. In addition, in some other embodiments of this application, the first conductive portion 110 and the second conductive portion 120 may be the first wall portion 111 and the second wall portion 112 respectively. In this case, the first wall portion 111 is insulated from the second wall portion 112.

For the electrode assembly 200, referring to FIG. 2 in conjunction with FIG. 1, the electrode assembly 200 is accommodated in the accommodation cavity 101, and is a core component of the button battery 1. The electrode assembly 200 includes first electrode plates 210 and second electrode plates 220 stacked alternately along the first preset direction X, and includes a separator 230 each located between a first electrode plate and a second electrode plate. The first electrode plate 210 includes a first current collector 211 and a first active material layer disposed on a surface of the first current collector 211. The polarity of the second electrode plate 220 is opposite to that of the first electrode plate 210. Similarly, the second electrode plate 220 includes a second current collector 221 and a second active material layer disposed on a surface of the second current collector 221. The specific material and structure of the current collector in the electrode plate as well as the specific constituents of the active material layer in the electrode plate are conventional technology in this field, and therefore, are not described in detail herein. The area of the separator 230 is slightly larger than that of the first electrode plate 210 and the second electrode plate 220. The separator is disposed between the first electrode plate 210 and the second electrode plate 220 to avoid electrical contact between the first electrode plate 210 and the second electrode plate 220, and in turn, avoid an internal short circuit of the button battery 1.

For the first tab 300, referring to FIG. 2 in conjunction with FIG. 1, the first tab 300 is accommodated in the accommodation cavity 101 and includes a first connecting portion 310 and a first extension portion 320. As shown in the drawing, the whole first connecting portion 310 extends along the first preset direction X, and is connected to each first electrode plate 210 separately. A disadvantage is that the electrode plates in the button batteries currently available in the market are all circular but the arc-shaped edge makes it inconvenient to connect to the first connecting portion 310. In order to overcome such a disadvantage, the outer contour of the first electrode plate 210 in this application includes a first straight section 201 extending straight. All the first straight sections 201 are substantially aligned with each other. The first connecting portion 310 extends along the first preset direction X, and is connected to the first straight section 201 of each first electrode plate 210 separately. Further, to ensure consistency of shape between the first electrode plate 210, the second electrode plate 220, and the separator 230, the first straight section 201 is disposed on the first electrode plate 210, the second electrode plate 220, and the separator 230 separately, and the first straight sections 201 are substantially aligned with each other.

The first extension portion 320 extends along the first preset direction X (for ease of showing the shape of the first extension portion 320, the first extension portion in the drawing is bent parallel to the first electrode plate 210), and assumes a continuously curved shape. The first end of the first extension portion 320 is connected to the first connecting portion 310. The second end of the first extension portion is connected to one of the first conductive portion 110 or the second conductive portion 120, for example, connected to the second conductive portion 120, so that the second conductive portion 120 forms an external terminal of the first electrode plate 210. In this way, in a process of dropping the button battery 1, the electrode assembly 200 is displaced relative to the housing assembly 100. The first extension portion 320 is disposed in a curved shape, so that the curved part of the first extension portion is deformed under the action of pulling or squeezing by both ends. The deformation process can absorb the energy of the impact force generated during the drop, thereby reducing the force on the two ends of the first tab 300, and in turn, reducing the hazards of fracture of the first tab 300 during the drop of the button battery 1. It is worth noting that in actual engineering operations, the first straight sections 201 of the first electrode plates 210 are unable to be aligned in an absolute sense. As long as the precision of the measuring tool is high enough, the degree of alignment between the two first straight sections 201 inevitably deviates from an ideal alignment effect. Therefore, the phrase "substantially aligned" in this application is intended to indicate that the misalignment between different first straight sections 201 is insignificant. For example, the distance difference between the projections of the same part of the first straight sections 201 projected on the first wall portion 111 is not more than 0.5 millimeter (mm).

The first extension portion 320 includes two first lateral faces 321 disposed opposite to each other along a second preset direction Y. In this embodiment, each first lateral face 321 includes a first concave face region 3211 recessed toward the other first lateral face 321 and a first convex face region 3212 protruding away from the other first lateral face 321. The first concave face regions 3211 alternate with the first convex face regions 3212, so that the first extension portion 320 extends along the first preset direction X, and assumes a continuously curved shape. The "second preset direction" is a direction parallel to the extension direction of the first straight section 201.

In this embodiment, the first tab 300 includes a plurality of first conductive strips, and is formed by stacking the plurality of first conductive strips. Referring to FIG. 3, which shows a three-dimensional schematic diagram of the connection between the first conductive strip 330 and the first electrode plate 210, and referring to other drawings together, the first conductive strips 330 are in one-to-one correspondence with the first electrode plates 210. Each first conductive strip is formed by extending outward from the first straight section 201, and includes a first connecting strip 331 and a first extension strip 332. The first connecting strip 331 is connected to the first straight section 201, and the first extension strip 332 is connected to the first connecting strip 331. Along the first preset direction X, an outermost (for example, as shown in FIG. 2, the lowest) first connecting strip 331 extends away from a center of the connected first electrode plate 210. The remaining first connecting strips 331 extend from the corresponding first straight sections 201 until the first connecting strips are close to or in fit with the outermost first connecting strip 331. All the first connecting strips 331 are fixed to each other by welding, so as to jointly form the first connecting portion 310. The first extension strip 332 is bent relative to the first connecting strip 331, and extends along the first preset direction X. The two slender surfaces of the first extension strip 332, which are opposite to each other along the second preset direction Y, are in a continuously curved shape. Each of the slender surfaces includes a concave portion 3321 recessed toward the other slender surface and a convex portion 3322 protruding away from the other slender surface. All corresponding concave portions 3321 on the same side of all first conductive strips 330 form the first concave face region 3211, and all corresponding convex portions 3322 on the same side form the first convex face region 3212. All the first extension strips 332 are stacked together to form the first extension portion 320. The slender surfaces on the same side constitute the first lateral face.

Preferably, the first conductive strip 330 and the first current collector 211 are formed in one piece. That is, the first conductive strip 330 and the first current collector 211 are cut and formed together from the same metal foil material. Due to the tiny thickness of the first electrode plate 210, the process of welding the first tab 300 to each first electrode plate 210 separately is extremely difficult and cumbersome. In contrast, by forming the first conductive strip 330 and the first current collector 211 in one piece, all the first conductive strips 330 can be stacked together to form the first tab 300 to effectively overcome the above drawback. It is worth noting that the thickness of the entire electrode assembly 200 is equal to a sum of the thicknesses of the first electrode plates 210, the separator 230, the second electrode plates 220, and the separator 230. In addition, the thickness of the first electrode plate 210 is equal to a sum of the thickness of the first current collector 211 and the thickness of the first active material layer applied on the surface of the first current collector 211. Therefore, the thickness of the first tab 300 formed by stacking the first conductive strips 330 is tiny in contrast to the thickness of the entire electrode assembly 200.

Understandably, the continuously curved structure of the first extension portion 320 in this embodiment is jointly defined by the first concave face region 3211 recessed along the second preset direction Y and the first convex face region 3212 protruding along the second preset direction Y, but this constitutes no limitation on this application. For example, in some other embodiments of this application, the first extension portion 320 includes two second lateral faces (not shown in the drawing) disposed opposite to each other along a third preset direction Z shown in FIG. 2. Each second lateral face includes a second concave face region recessed toward the other second lateral face and a second convex face region protruding away from the other second lateral face. The second concave face regions alternate with the second convex face regions, so that the first extension portion 320 also extends along the first preset direction X, and assumes a continuously curved shape, thereby reducing the hazards of fracture of the first tab during drop of the button battery 1. The "third preset direction" is a direction perpendicular to both the first preset direction X and an extension direction of the first straight section 201. Definitely, in some other embodiments of this application, the first extension portion 320 may extend along the third preset direction Z instead, and assumes a continuously curved shape, thereby also achieving the effect of reducing the hazards of fracture of the first tab 300. However, compared with the preceding two implementations, this implementation increases the size of the button battery 1 along the third preset direction Z, thereby being adverse to miniaturizing the button battery 1.

For the second tab 400, referring to FIG. 1 and FIG. 2, the second tab 400 is substantially identical to the first tab 300 in shape, and is accommodated in the accommodation cavity 101 and includes a second connecting portion and a second extension portion. The whole second connecting portion extends along the first preset direction X, and is connected to each second electrode plate 220 separately. A disadvantage is that the electrode plates in the button batteries currently available in the market are all circular but the arc-shaped edge makes it inconvenient to connect to the second connecting portion. In order to overcome such a disadvantage, the outer contour of the second electrode plate 220 in this application includes a second straight section 202 extending straight. Optionally, the second straight section 202 is parallel to the first straight section 201. All the second straight sections 202 are substantially aligned with each other. The second connecting portion extends along the first preset direction X, and is connected to the second straight section 202 of each second electrode plate 220 separately. Further, to ensure consistency of shape between the second electrode plate 220, the second electrode plate 220, and the separator 230, the second straight section 202 is disposed on the second electrode plate 220, the second electrode plate 220, and the separator 230 separately, and the second straight sections 202 are substantially aligned with each other.

The second extension portion extends along the first preset direction X, and assumes a curved shape, and preferably a continuously curved shape. The first end of the second extension portion is connected to the second connecting portion. The second end of the second extension portion is connected to one of the first conductive portion 110 or the second conductive portion 120, whichever is not connected to the first tab 300, for example, connected to the first conductive portion 110, so that the first conductive portion 110 forms an external terminal of the second electrode plate 220. In this way, in a process of dropping the button battery 1, the electrode assembly 200 is displaced relative to the housing assembly 100. The second extension portion is disposed in a continuously curved shape, so that the curved part of the second extension portion is deformed under the action of pulling or squeezing by both ends. The deformation process can absorb the energy of the impact force generated during the drop, thereby reducing the force on the two ends of the second tab 400, and in turn, reducing the hazards of fracture of the second tab 400 during the drop of the button battery 1.

The second extension portion includes two third lateral faces disposed opposite to each other along a fourth preset direction. In this embodiment, each third lateral face includes a third concave face region recessed toward the other third lateral face and a third convex face region protruding away from the other third lateral face. The third concave face regions alternate with the third convex face regions, so that the second extension portion extends along the first preset direction, and assumes a continuously curved shape. The "fourth preset direction" is a direction parallel to the extension direction of the second straight section 202. In this embodiment, the fourth preset direction is identical to the second preset direction. However, in other embodiments of this application, the fourth preset direction may vary depending on the specific arrangement of the second straight section 202.

In this embodiment, the second tab 400 includes a plurality of second conductive strips, and is formed by stacking the plurality of second conductive strips. Similar to the circumstance of the first conductive strips 330 described above, the second conductive strips are in one-to-one correspondence with the second electrode plates 220. Each second conductive strip is formed by extending outward from the second straight section 202, and includes a second connecting strip and a second extension strip. The second connecting strip is connected to the second straight section, and the second extension strip is connected to the second connecting strip. Along the first preset direction, an outermost (for example, as shown in FIG. 2, the lowest) second connecting strip extends away from the center of the connected second electrode plate 220. The remaining second connecting strips extend from the corresponding second straight sections 202 until the second connecting strips are close to or in fit with the outermost second connecting strip. All the second connecting strips are fixed to each other by welding, so as to jointly form the second connecting portion. The second extension strip is bent relative to the second connecting strip, and extends along the first preset direction X. The two slender surfaces of the second extension strip, which are opposite to each other along the fourth preset direction, are in a continuously curved shape. Each of the slender surfaces includes a concave portion recessed toward the other slender surface and a convex portion protruding away from the other slender surface. All corresponding concave portions on the same side of all second conductive strips form the third concave face region, and all corresponding convex portions on the same side form the third convex face region. All the second extension strips are stacked together to form the second extension portion. The slender surfaces on the same side constitute the third lateral face.

Preferably, the second conductive strip and the second current collector 221 are formed in one piece. That is, the second conductive strip and the second current collector 221 are cut and formed together from the same metal foil material. Due to the tiny thickness of the second electrode plate 220, the process of welding the second tab 400 to each second electrode plate 220 separately is extremely difficult and cumbersome. In contrast, by forming the second conductive strip and the second current collector 221 in one piece, all the second conductive strips can be stacked together to form the second tab 400 to effectively overcome the above drawback. It is worth noting that the thickness of the entire electrode assembly 200 is equal to a sum of the thicknesses of the second electrode plates 220, the separator 230, the second electrode plates 220, and the separator 230. In addition, the thickness of the second electrode plate 220 is equal to a sum of the thickness of the second current collector 221 and the thickness of the second active material layer applied on the surface of the second current collector 221. The thickness of the second conductive strip is equal to the thickness of the second current collector. Therefore, the thickness of the second tab 400 formed by stacking the second conductive strips is tiny in contrast to the thickness of the entire electrode assembly 200.

Understandably, the continuously curved structure of the second extension portion in this embodiment is jointly defined by the third concave face region recessed along the fourth preset direction and the third convex face region protruding along the fourth preset direction, but this constitutes no limitation on this application. For example, in some other embodiments of this application, the second extension portion includes two fourth lateral faces disposed opposite to each other along a fifth preset direction. Each second lateral face includes a fourth concave face region recessed toward the other fourth lateral face and a fourth convex face region protruding away from the other fourth lateral face. The fourth concave face regions alternate with the fourth convex face regions, so that the second extension portion also extends along the first preset direction X, and assumes a continuously curved shape, thereby reducing the hazards of fracture of the second tab during drop of the button battery 1. The "fifth preset direction" is a direction perpendicular to both the first preset direction X and the extension direction of the second straight section 202. In this embodiment, the fifth preset direction is identical to the third preset direction Z. However, in other embodiments of this application, the fifth preset direction may vary depending on the specific arrangement of the second straight section 202. Definitely, in some other embodiments of this application, the second extension portion may extend along the third preset direction Z instead, and assumes a continuously curved shape, thereby also achieving the effect of reducing the hazards of fracture of the second tab 400. However, compared with the preceding two implementations, this implementation increases the size of the button battery 1 along the third preset direction Z, thereby being adverse to miniaturizing the button battery 1.

The button battery 1 provided in an embodiment of this application includes a housing assembly 100, an electrode assembly 200, a first tab 300, and a second tab 400. The housing assembly 100 includes a first conductive portion 110 and a second conductive portion 120. The first conductive portion 110 is insulated from the second conductive portion 120. The electrode assembly 200 includes first electrode plates 210 and second electrode plates 220 of opposite polarities. The first tab 300 includes a first connecting portion 310 and a first extension portion 320. The first connecting portion is connected to each first electrode plate 210, and the first extension portion extends along the first preset direction X and assumes a continuously curved shape. One of the first conductive portion 110 or the second conductive portion 120 is connected to the first electrode plate 210.

In contrast with the button battery currently available in the market, when the button battery 1 provided in an embodiment of this application is dropped, the electrode assembly 200 inside the housing assembly 100 is displaced relative to the housing assembly. The first extension portion 320 of the first tab 300 is in a continuously curved shape, and therefore, can be easily deformed (for example, stretched or contracted) under the impact force in the dropping process. Through the deformation, a part of energy of the impact force can be absorbed. Therefore, the button battery 1 provided in an embodiment of this application can effectively reduce the hazards of tab fracture during the drop of the button battery.

Based on the same inventive concept, this application further provides an electrical device. The electrical device includes a load and the button battery 1 disclosed in the foregoing embodiment. The button battery 1 is configured to provide electrical energy to the load. The electrical device includes the button battery 1 disclosed in the foregoing embodiment, and therefore, can effectively reduce the hazards of tab fracture during the drop of the button battery inside the electrical device.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. A button battery, comprising a housing assembly, an electrode assembly, a first tab and a second tab; **characterized in that**
the housing assembly forms an accommodation cavity and comprises a first conductive portion and a second conductive portion, and the first conductive portion is insulated from the second conductive portion;
the electrode assembly is accommodated in the accommodation cavity and comprises first electrode plates, second electrode plates, and a separator; the first electrode plates and the second electrode plates are of opposite polarities and stacked alternately along a first preset direction; and the separator is disposed between the first electrode plate and the second electrode plate;
the first tab is accommodated in the accommodation cavity and comprises a first connecting portion and a first extension portion, the first connecting portion is connected to each first electrode plate, the first extension portion extends along the first preset direction and assumes a curved shape, a first end of the first extension portion is connected to the first connecting portion, and one of the first conductive portion or the second conductive portion is connected to a second end of the first extension portion; and
the second tab is accommodated in the accommodation cavity and connected to each second electrode plate, and the other of the first conductive portion or the second conductive portion is connected to the second tab.

2. The button battery according to claim 1, **characterized in that**, an outer contour of each first electrode plate comprises a first straight section extending straight, and all the first straight sections are substantially aligned with each other;
the first connecting portion is connected to each first straight section; and
the first extension portion comprises two first lateral faces disposed opposite to each other along a second preset direction, each first lateral face comprises a first concave face region recessed toward the other first lateral face and a first convex face region protruding away from the other first lateral face, and the second preset direction is parallel to an extension direction of the first straight section.

3. The button battery according to claim 1, **characterized in that**, each first electrode plate comprises a first straight section extending straight, and all the first straight sections are substantially aligned with each other;
the first connecting portion is connected to each first straight section; and
the first extension portion comprises two second lateral faces disposed opposite to each other along a third preset direction, each second lateral face comprises a second concave face region recessed toward the other second lateral face and a second convex face region protruding away from the other second lateral face; and
the third preset direction is perpendicular to both the first preset direction and an extension direction of the first straight section.

4. The button battery according to any one of claims 1 to 3, **characterized in that** the first extension portion is in a continuously curved shape.

5. The button battery according to claim 2 or 3, **characterized in that** the first tab comprises a plurality of first conductive strips;
the first conductive strips are in one-to-one correspondence with the first electrode plates, and the first conductive strips are formed by extending outward from the first straight sections;
each first conductive strip comprises a first connecting strip and a first extension strip, the first connecting strip is connected to the first straight section, and the first extension strip is connected to the first connecting strip; and
an outermost first connecting strip extends away from a center of the connected first electrode plate, remaining first connecting strips extend from corresponding first straight sections until the first connecting strips are close to or in fit with the outermost first connecting strip, all the first connecting strips combine to form the first connecting portion, and all the first extension strips are stacked to form the first extension portion.

6. The button battery according to claim 5, **characterized in that** the first electrode plate comprises a first current collector and a first active material layer disposed on a surface of the first current collector; and
the first conductive strip is formed by extending outward from an edge of the first current collector, and the first conductive strip and the first current collector are formed in one piece.

7. The button battery according to claim 1, **characterized in that** the second tab comprises a second connecting portion and a second extension portion, the second connecting portion is connected to each second electrode plate, the second extension portion extends along the first preset direction and assumes a curved shape, and a first end of the second extension portion is connected to the second connecting portion; and
one of the first conductive portion or the second conductive portion is connected to the first extension portion, and the other of the first conductive portion or the second conductive portion is connected to a second end of the second extension portion.

8. The button battery according to claim 7, **characterized in that**, an outer contour of each second electrode plate comprises a second straight section extending straight, and all the second straight sections of the second electrode plates are substantially aligned with each other;
the second connecting portion is connected to the second straight section of each second electrode plate; and
the second extension portion comprises two third lateral faces disposed opposite to each other along a fourth preset direction, each third lateral face comprises a third concave face region recessed toward the other third lateral face and a third convex face region protruding away from the other third lateral face, and the fourth preset direction is parallel to an extension direction of the second straight section.

9. The button battery according to claim 7 to 8, **characterized in that** the second extension portion is in a continuously curved shape.

10. The button battery according to claim 8, **characterized in that** the second tab comprises a plurality of second conductive strips;
the second conductive strips are in one-to-one correspondence with the second electrode plates, and the second conductive strips are formed by extending outward from the second straight sections;
each second conductive strip comprises a second connecting strip and a second extension strip, the second connecting strip is connected to the second straight section, and the second extension strip is connected to the second connecting strip; and
an outermost second connecting strip extends away from a center of the connected second electrode plate, remaining second connecting strips extend from corresponding second straight sections until the second connecting strips are close to or in fit with the outermost second connecting strip, all the second connecting strips combine to form the second connecting portion, and all the second extension strips are stacked to form the second extension portion.

11. The button battery according to claim 1, **characterized in that** the first conductive portion comprises a first wall portion, a second wall portion, and a connecting wall; the first wall portion and the second wall portion are disposed opposite to each other along the first preset direction; the connecting wall connects the first wall portion and the second wall portion; and the first wall portion, the second wall portion, and the connecting wall close in to form the accommodation cavity; and
a through mounting hole is created on the connecting wall, and the second conductive portion is mounted in the mounting hole through an insulator.

12. An electrical device, **characterized in that** the electrical device comprises the button battery according to any one of claims 1 to 11.
